(19) **Europäisches Patentamt / European Patent Office / Office européen des brevets**

(11) **EP 4 726 080 A1**

(12) # EUROPEAN PATENT APPLICATION

(43) Date of publication:
**15.04.2026 Bulletin 2026/16**

(21) Application number: **25168017.9**

(22) Date of filing: **02.04.2025**

(51) International Patent Classification (IPC):
**C30B 15/02** (2006.01)    **C30B 29/06** (2006.01)

(52) Cooperative Patent Classification (CPC):
**C30B 15/02; C30B 29/06;** Y02P 10/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **10.10.2024 CN 202411412850**

(71) Applicants:
• **JINKO SOLAR CO., LTD**
  **ShangRao, Jiangxi 334100 (CN)**
• **Qinghai Jinko Solar Co., Ltd.**
  **Xining City, Qinghai, 810021 (CN)**

(72) Inventors:
• **SU, Chunsheng**
  **Shangrao, 334100 (CN)**
• **LIU, Lei**
  **Shangrao, 334100 (CN)**
• **CHEN, Yangjun**
  **Shangrao, 334100 (CN)**
• **SHANG, Weize**
  **Shangrao, 334100 (CN)**

(74) Representative: **Haseltine Lake Kempner LLP**
  **Cheapside House**
  **138 Cheapside**
  **London EC2V 6BJ (GB)**

(54) **METHOD AND DEVICE FOR CONTROLLING CRYSTAL ROD AXIAL RESISTIVITY, COMPUTER DEVICE AND COMPUTER PRODUCT**

(57)    Disclosed are a method and a device for controlling crystal rod axial resistivity. The method includes: determining a first stibium evaporation amount in an equal-diameter growth process according to a first correlation relationship between a stibium evaporation velocity and a remaining-material weight, and controlling a stibium-phosphorus doping ratio in the equal-diameter growth process according to the first stibium evaporation amount; determining a second stibium evaporation amount in a seeding and shouldering process according to a second correlation relationship between the stibium evaporation velocity and a seeding and shouldering duration, and controlling the stibium-phosphorus doping ratio in the seeding and shouldering process according to the second stibium evaporation amount; and determining a third stibium evaporation amount at a re-charging stage according to a target re-charging evaporation calculation model , and controlling the stibium-phosphorus doping ratio at the re-charging stage according to the third stibium evaporation amount.

Determining a first stibium evaporation amount in a stibium-phosphorus co-doped single-crystal growth furnace in an equal-diameter growth process according to a first correlation relationship between a stibium evaporation velocity and a remaining-material weight in the stibium-phosphorus co-doped single-crystal growth furnace, and controlling a stibium-phosphorus doping ratio in the equal-diameter growth process according to the first stibium evaporation amount — S20

Determining a second stibium evaporation amount in the stibium-phosphorus co-doped single-crystal growth furnace in a seeding and shouldering process according to a second correlation relationship between the stibium evaporation velocity and a seeding and shouldering duration, and controlling the stibium-phosphorus doping ratio in the seeding and shouldering process according to the second stibium evaporation amount — S40

Determining a third stibium evaporation amount in the stibium-phosphorus co-doped single-crystal growth furnace at a re-charging stage according to a target re-charging evaporation calculation model, and controlling the stibium-phosphorus doping ratio at the re-feeding stage according to the third stibium evaporation amount, so that uniformity of a Czochralski crystal rod axial resistivity is within a target range — S60

FIG. 1

**Description**

TECHNICAL FIELD

The invention belongs to the technical field of Czochralski-grown silicon single crystal, and particularly relates to a method and a device for controlling crystal rod axial resistivity, a computer device and a computer product.

BACKGROUND

The Czochralski method is a relatively simple method for producing single-crystal silicon by gradually pulling the single-crystal silicon using a rotary seed crystal. The production cost of the single-crystal silicon by using this method is relatively low, and the single-crystal silicon can be produced in large quantities, thus producing high-quality and large-size semiconductor-grade or solargrade single-crystal silicon wafers, therefore the Czochralski method is widely used in the production of the single-crystal silicon.

However, the axial resistivity of the Czochralski single-crystal silicon is not easy to control, and there are more crystal defects, thus reducing the lifetime of minority carriers, and the oxygen donor formed due to high oxygen content in the single-crystal silicon will cause an attenuation of cell conversion efficiency, thus limiting the improvement of the cell conversion efficiency.

Therefore, in order to ensure the quality and performance of the single-crystal silicon produced by the Czochralski method, it is necessary to provide a method for controlling and optimizing the uniformity of axial resistivity of the Czochralski single-crystal silicon effectively.

SUMMARY

In view of this, it is necessary to provide a method and a device for controlling crystal rod axial resistivity, a computer device, and a computer product, which can at least ensure that axial uniformity of dopant elements in the single-crystal silicon is improved in a crystal pulling process, thereby achieving an accurate control for the resistivity and improving uniformity of the crystal rod axial resistivity.

According to embodiments of the present invention, in a first aspect, the present invention provides a method for controlling crystal rod axial resistivity, including: determining a first stibium evaporation amount in a stibium-phosphorus co-doped single-crystal growth furnace in an equal-diameter growth process according to a first correlation relationship between a stibium evaporation velocity and a remaining-material weight in the stibium-phosphorus co-doped single-crystal growth furnace, and controlling a stibium-phosphorus doping ratio in the equal-diameter growth process according to the first stibium evaporation amount; determining a second stibium evaporation amount in the stibium-phosphorus co-doped single-crystal growth furnace in a seeding and shouldering process according to a second correlation relationship between the stibium evaporation velocity and a seeding and shouldering duration, and controlling the stibium-phosphorus doping ratio in the seeding and shouldering process according to the second stibium evaporation amount; and determining a third stibium evaporation amount in the stibium-phosphorus co-doped single-crystal growth furnace at a re-charging stage according to a target re-charging evaporation calculation model , and controlling the stibium-phosphorus doping ratio at the re-charging stage according to the third stibium evaporation amount, so that uniformity of a Czochralski crystal rod axial resistivity is within a target range.

In the method for controlling the crystal rod axial resistivity in the above embodiment, since the Czochralski silicon single crystal manufacturing process includes the stages of charging, melting, seeding, necking, shouldering, isometric growth and the like, the stibium-phosphorus co-doped Czochralski silicon single crystal manufacturing process is adopted, and the characteristics that the stibium evaporation amount in isometric growth process, the seeding and shouldering process and at the re-charging stage has great influence on the uniformity of the crystal rod axial resistivity are utilized. First, based on the equal-diameter growth process control module, according to the first correlation relationship between the stibium evaporation velocity and the remaining-material weight in the stibium-phosphorus co-doped single-crystal growth furnace, the first stibium evaporation amount in the crystal pulling equal-diameter growth process in the stibium-phosphorus co-doped single-crystal growth furnace is determined, the stibium-phosphorus doping ratio in the equal-diameter growth process is controlled according to the first stibium evaporation amount, and accurate doping of stibium elements in the equal-diameter growth process is ensured. Then, the second stibium evaporation amount in the stibium-phosphorus co-doped single-crystal growth furnace in the pulling and seeding and shouldering process is determined according to the second correlation relationship between the stibium evaporation velocity and the seeding and shouldering duration, and the stibium-phosphorus doping ratio of the seeding and shouldering process is controlled according to the second stibium evaporation amount; accurate doping of stibium elements in the seeding and shouldering process is ensured; and further, according to the target re-charging evaporation calculation model, a third stibium evaporation amount in the stibium-phosphorus co-doped single-crystal growth furnace at the re-charging stage is determined, and an stibium-phosphorus doping ratio of the re-charging stage is controlled according to the third stibium evaporation amount, so as to ensure accurate doping of stibium elements at the re-charging stage, ensure that uniformity of axial dopant elements in the single-crystal silicon is improved in the crystal pulling process, and achieve accurate control of resistivity, so that uniformity of Czochralski crystal rod axial resistivity is within a target range. Therefore, the uniformity of the crystal rod axial resistivity is improved.

In some embodiments, before determining the third stibium evaporation amount in the stibium-phosphorus co-doped single-crystal growth furnace at the re-charging stage according to the target re-charging evaporation calculation model , the method further includes: determining an irrelevant variable at the re-charging stage by using a correlation analysis algorithm, where a correlation degree between the irrelevant variable and the stibium evaporation amount at the re-charging stage is less than a preset threshold; determining a target variable correlated with the stibium evaporation amount at the re-charging stage according to the irrelevant variable, where the target variable includes a stibium concentration when a single crystal ridge is broken, the remaining-material weight and a re-charging duration; and determining a functional relationship between the stibium evaporation amount and the target variable by using a linear fitting algorithm.

In the above embodiment of the method for controlling crystal rod axial resistivity, the irrelevant variable at the re-charging stage is determined by using the correlation analysis algorithm, where the correlation degree between the irrelevant variable and the stibium evaporation amount at the re-charging stage is less than the preset threshold, so that the target variable correlated with the stibium evaporation amount at the re-charging stage is determined according to the irrelevant variable. The target variable includes the stibium concentration when the single crystal ridge is broken, the remaining-material weight and the re-charging duration. Then the functional relationship between the stibium evaporation amount and the target variable is determined by using the linear fitting algorithm, so that the third stibium evaporation amount in the stibium-phosphorus co-doped single-crystal growth furnace at the re-charging stage can be determined according to the function relationship, and the stibium-phosphorus doping ratio at the re-charging stage is controlled according to the third stibium evaporation amount, thereby ensuring the accurate doping of stibium elements at the re-charging stage.

In some embodiments, the target re-charging evaporation calculation model in the method for controlling the crystal rod axial resistivity is: $P = i + kQ$, where $P$ represents the third stibium evaporation amount, $Q$ represents the remaining-material weight at the re-charging stage, and $i$ and $k$ represent constants, determined by using a correlation analysis method.

In the method for controlling the crystal rod axial resistivity of the above embodiment, by establishing the specific function expression between the stibium evaporation amount and the target variable, the third stibium evaporation amount in the stibium-phosphorus co-doped single-crystal growth furnace at the re-charging stage can be determined according to the specific function expression, and the calculation complexity of the determination algorithm and the time consumption of the calculation can be reduced, and the stibium-phosphorus doping ratio at the re-charging stage can be controlled according to the third stibium evaporation amount, thereby ensuring the accurate doping of stibium elements at the re-charging stage.

In some embodiments, a preset state of the stibium-phosphorus co-doped single-crystal growth furnace includes a furnace pressure being a preset pressure value, and an argon flow rate being a preset flow rate. Before determining the first stibium evaporation amount in the stibium-phosphorus co-doped single-crystal growth furnace in the equal-diameter growth process according to the first correlation relationship between the stibium evaporation velocity and the remaining-material weight in the stibium-phosphorus co-doped single-crystal growth furnace, the method includes: obtaining a stibium diffusion constant after a preset amount of stibium is doped into a silicon melt in the single-crystal growth furnace in the preset state; according to the stibium diffusion constant, calculating and simulating a simulated distribution curve of the crystal rod axial resistivity caused by a stibium segregation under a condition that a resistivity at a starting position of pulling a crystal is a target value; determining a measured distribution curve of the crystal rod axial resistivity according to the simulated distribution curve; and determining the first correlation relationship between the stibium evaporation velocity and the remaining-material weight by using a correlation analysis method according to the measured distribution curve of the crystal rod axial resistivity.

In the method for controlling the crystal rod axial resistivity of the above embodiment, the stibium diffusion constant in the silicon melt affects the distribution and concentration of the stibium in the silicon melt, which in turn affects the growth rate and quality of the single crystal. Experiments show that the stibium diffusion constant in the silicon melt is related to factors such as a kinematic viscosity coefficient and a relative rotation speed of the silicon melt, and the diffusion constant may be determined under specific growth conditions. Therefore, by setting the furnace pressure as the preset pressure value and setting the argon flow rate as the preset flow rate, multiple experiments are carried out to obtain the stibium diffusion constant after the preset amount of stibium is doped into the silicon melt in the single-crystal growth furnace in the preset state, and it is determined that the stibium diffusion constant and the corresponding growth parameters can meet the requirements of current mass production. Then, according to the stibium diffusion constant, a simulated distribution curve of the crystal rod axial resistivity caused by the stibium segregation under the condition that the resistivity at the starting position of pulling the crystal is the target value is calculated and simulated, and the measured distribution curve of the crystal rod axial resistivity is determined according to the simulated distribution curve, so that the fitting degree of the measured distribution curve of the crystal rod axial resistivity and the simulated distribution curve is greater than or equal to the preset threshold. Then the first correlation relationship between the stibium evaporation velocity and the remaining-material weight is determined by using the correlation analysis method according to the measured distribution curve of the crystal rod axial resistivity, so that the corresponding stibium evaporation velocity can be accurately calculated according to the real-time remaining-material weight in the single-crystal growth furnace and the first correlation relationship, thereby accurately calculating the first stibium evaporation amount in the Czochralski isometric growth process.

In some embodiments, obtaining the stibium diffusion constant after the preset amount of stibium is doped into the silicon melt in the single-crystal growth furnace in the preset state includes: doping the preset amount of stibium into the silicon melt in the single-crystal growth furnace in the preset state; and collecting data of axial resistivities of sections of multiple slices of the Czochralski crystal rod, and calculating the stibium diffusion constant based on the collected data of the axial resistivities.

In some embodiments, collecting the data of axial resistivities of the sections of the multiple slices of the Czochralski crystal rod includes: cutting the crystal rod at an interval of 50 mm in an axial direction to get the multiple slices having sections; and measuring each of the data of the axial resistivities of the sections at three points evenly distributed in a circumferential direction of a concentric circle of each of the sections of the multiple slices.

In some embodiments, the preset pressure value is in a range from 3 Torr to 15 Torr.

In some embodiments, the preset flow rate is in a range from 30 slpm to 170 slpm.

In some embodiments, the first correlation relationship between the stibium evaporation velocity and the remaining-material weight in the equal-diameter growth process is: $E_v = a + bW + cW^2 + dW^3$, where $E_v$ represents the stibium evaporation velocity in the equal-diameter growth process, $W$ represents the remaining-material weight in the equal-diameter growth process, and $a$, $b$, $c$ and $d$ represent constants, determined by using a correlation analysis method.

In the method for controlling the crystal rod axial resistivity in the foregoing embodiments, it is determined that the stibium evaporation velocity is mainly correlated with the remaining-material weight by using the correlation analysis method. After a large quantity of actual data are obtained, the values of the constants in the first correlation relationship between the stibium evaporation velocity and the remaining-material weight in the above equal-diameter growth process are determined, and the function expression of the first correlation relationship between the stibium evaporation velocity and the remaining-material weight in the equal-diameter growth process is determined, so that the corresponding stibium evaporation velocity is accurately calculated according to the real-time remaining-material weight in the single-crystal growth furnace and the first stibium evaporation amount in the Czochralski equal-diameter growth process is accurately calculated according to the stibium evaporation velocity and the first correlation relationship between the stibium evaporation amount and the stibium evaporation velocity in the Czochralski equal-diameter growth process, thereby accurately and dynamically determine the first stibium evaporation amount in the Czochralski equal-diameter growth process.

In some embodiments, a temperature in the seeding and shouldering process is a preset temperature value. Before determining the second stibium evaporation amount in the stibium-phosphorus co-doped single-crystal growth furnace in the seeding and shouldering process according to the second correlation relationship between the stibium evaporation velocity and the seeding and shouldering duration, the method for controlling crystal rod axial resistivity further includes: obtaining a curve of the stibium evaporation velocity changing with the seeding and shouldering duration in the single-crystal growth furnace in the seeding and shouldering process; and determining a function expression between the stibium evaporation velocity and the seeding and shouldering duration according to the curve of the stibium evaporation velocity changing with the seeding and shouldering duration, where the second correlation relationship is the function expression.

In the method for controlling the crystal rod axial resistivity in the above embodiment, since the temperature in the other crystal pulling processes other than the Czochralski equal-diameter growth process is basically constant, after the curve of the stibium evaporation velocity changing with the seeding and shouldering duration in the single-crystal growth furnace is obtained, the function expression between the stibium evaporation velocity and the seeding and shouldering duration can be determined according to the curve, so that a current stibium evaporation velocity in the Czochralski seeding and shouldering process can be accurately calculated according to the function expression and the real-time seeding and shouldering duration, and the second stibium evaporation amount in the Czochralski seeding and shouldering process can be accurately calculated or determined according to the current stibium evaporation velocity and the correlation relationship between the stibium evaporation amount in the Czochralski seeding and shouldering process and the stibium concentration after the stibium evaporation.

In some embodiments, the function expression between the stibium evaporation velocity and the seeding and shouldering duration is: $E_v = m \times t^n$

where $E_v$ represents the stibium evaporation velocity in the seeding and shouldering process, $t$ represents the seeding and shouldering duration, and m and *n* represent constants.

According to the method for controlling the crystal rod axial resistivity in the above embodiment, after determining that the stibium evaporation velocity in the Czochralski seeding and shouldering process is mainly correlated with the seeding and shouldering duration, the values of the constants in the function expression between the stibium evaporation velocity and the seeding and shouldering duration can be determined according to a large amount of actual data, thereby determining the specific function expression between the stibium evaporation velocity and the seeding and shouldering duration in the Czochralski seeding and shouldering process.

In a second aspect, the invention provides a device for controlling crystal rod axial resistivity. The device includes an equal-diameter growth process control module, a seeding and shouldering process control module, and a re-charging stage control module. The equal-diameter growth process control module is configured to determine a first stibium evaporation amount in a stibium-phosphorus co-doped single-crystal growth furnace in an equal-diameter growth process according to a first correlation relationship between a stibium evaporation velocity and a remaining-material weight in the stibium-phosphorus co-doped single-crystal growth furnace, and control a stibium-phosphorus doping ratio in the equal-diameter growth process according to the first stibium evaporation amount. The seeding and shouldering process control module is configured to determine a second stibium evaporation amount in the stibium-phosphorus co-doped single-crystal growth furnace in a seeding and shouldering process according to a second correlation relationship between the stibium evaporation velocity and a seeding and shouldering duration, and control the stibium-phosphorus doping ratio in the seeding and shouldering process according to the second stibium evaporation amount. The re-charging stage control module is configured to determine a third stibium evaporation amount in the stibium-phosphorus co-doped single-crystal growth furnace at a re-charging stage according to a target re-charging evaporation calculation model, and control the stibium-phosphorus doping ratio at the re-charging stage according to the third stibium evaporation amount, so that uniformity of a Czochralski crystal rod axial resistivity is within a target range.

In the device for controlling crystal rod axial resistivity of the embodiment above, the manufacturing process of the Czochralski silicon single crystal includes the following stages: charging, melting, seeding, necking, shouldering, and isometric growth processes, and etc., the manufacturing process of the Czochralski stibium-phosphorus co-doped silicon single crystal is adopted, and the characteristics that the stibium evaporation amount in the isometric growth process, in the seeding and shouldering process and at the re-charging stage has a great influence on the uniformity of the crystal rod axial resistivity is utilized. Firstly, based on the equal-diameter growth process control module, the first stibium evaporation amount in the stibium-phosphorus co-doped single-crystal growth furnace in the equal-diameter growth process is determined according to the first correlation relationship between the stibium evaporation velocity and the remaining-material weight in the stibium-phosphorus co-doped single-crystal growth furnace, and the stibium-phosphorus doping ratio in the equal-diameter growth process is controlled according to the first stibium evaporation amount, thereby ensuring an accurate doping of stibium elements in the isometric growth process. Then based on the seeding and shouldering process control module, the second stibium evaporation amount in the stibium-phosphorus co-doped single-crystal growth furnace in the seeding and shouldering process is determined according to the second correlation relationship between the stibium evaporation velocity and the seeding and shouldering duration, and the stibium-phosphorus doping ratio in the seeding and shouldering process is controlled according to the second stibium evaporation amount, thereby ensuring the accurate doping of stibium elements in the seeding and shouldering process. Further, based on the re-charging stage control module, the third stibium evaporation amount in the stibium-phosphorus co-doped single-crystal growth furnace at the re-charging stage is determined according to the target re-charging evaporation calculation model , and the stibium-phosphorus doping ratio at the re-charging stage is controlled according to the third stibium evaporation amount, thereby ensuring the accurate doping of stibium elements at the re-charging stage, improving the axial uniformity of dopant elements in the single-crystal silicon in the crystal pulling process, and achieving the accurate control for the resistivity, so that uniformity of the Czochralski crystal rod axial resistivity is within the target range, thereby improving the uniformity of the crystal rod axial resistivity.

In a third aspect, the invention provides a control apparatus for controlling crystal rod axial resistivity including a processor and a memory which has a computer program stored thereon, and the processor, when executing the computer program, executes steps of any one of the methods above.

In a fourth aspect, the invention provides a computer-readable storage medium, having a computer program stored thereon. The computer program, when executed by a processor, causes the processor to execute steps of any one of the methods above.

In a fifth aspect, the invention provides a computer program product, including a computer program. The computer program, when executed by a processor, executes steps of any one of the methods above.

BRIEF DESCRIPTION OF THE DRAWINGS

In order to more clearly illustrate the technical solutions of the embodiments of the present disclosure, the accompanying drawings required in the description of the embodiments will be briefly described below. Obviously, the accompanying drawings in the description are only some embodiments of the present invention, and for those ordinary skilled in the art, drawings of other embodiments may also be obtained according to these accompanying drawings without creative efforts.

FIG. 1 is a schematic flowchart of a method for controlling crystal rod axial resistivity according to an embodiment of the present disclosure;

FIG. 2 is a view showing a comparison of axial resistivities of single crystals obtained by co-doping stibium and phosphorus under three furnace pressures according to an embodiment of the present invention;

FIG. 3a is a view showing a simulated distribution curve of the crystal rod axial resistivity and a measured distribution curve of crystal rod axial resistivity obtained without adjusting growth parameters according to an embodiment of the present disclosure;

FIG. 3b is a view showing a simulated distribution curve of the crystal rod axial resistivity and a measured distribution curve of crystal rod axial resistivity obtained by adjusting growth parameters according to an embodiment of the present disclosure;

FIG. 4 shows a curve of a stibium evaporation velocity changing with a crystal length, which is obtained when the curves shown in FIG. 3b have been obtained according to an embodiment of the present invention;

FIG. 5 shows a correlation curve of remaining-material weight and stibium evaporation velocity according to an embodiment of the present invention;

FIG. 6 shows two curves of a stibium evaporation velocity changing with a remaining-material weight, which are obtained by a first calculation method and a second calculation method respectively under the same test conditions corresponding to the correlation curve in FIG. 5;

FIG. 7 shows a curve of a stibium evaporation velocity changing with a seeding and shouldering duration in a Czochralski seeding and shouldering process according to an embodiment of the present invention;

FIG. 8 is a schematic view showing a structure of a device for controlling crystal rod axial resistivity according to an embodiment of the present invention.

Reference Number and Description thereof:
10. equal-diameter growth process control module; 20. seeding and shouldering process control module; 30. re-charging stage control module.

DETAILED DESCRIPTION OF THE EMBODIMENTS

To facilitate understanding of the present disclosure, the present disclosure will be described more fully below with reference to the accompanying drawings. Preferred embodiments of the present disclosure are presented in the accompanying drawings. However, the present disclosure may be implemented in various forms and is not limited to the embodiments described herein. Rather, these embodiments are provided to provide a more thorough and comprehensive understanding of the present disclosure.

Unless otherwise defined, all technical and scientific terms used herein have the same meaning as commonly understood by those skilled in the art. The terminologies used herein in the description of the present disclosure are used for the purpose of describing specific embodiments only, but not intended to limit the present disclosure. As used herein, the term "and/or" includes any combination and all combinations of one or more related listed items.

When "include", "have" and "involve" as described herein are used, another component may also be added unless a well-defined term such as "only", "consist of", etc., is used. Unless mentioned to the contrary, a term in the singular form may include the plural forms, and cannot be understood the number thereof is one.

The principle of segregation of stibium-phosphorus co-doped single crystal mainly relates to a change in a concentration distribution of dopant elements during a crystal growth. During the growth of single-crystal silicon, the introduction of dopant elements such as stibium and phosphorus can significantly affect the physical and chemical properties of the crystal. Solubilities of these dopant elements in the melt and in the solid are different. The solubility in the melt is usually greater than the solubility in the solid. An equilibrium segregation coefficient of stibium in silicon is very small (about 0.023), resulting in poor uniformity of axial resistivity of Czochralski stibium-doped single-crystal silicon.

A segregation phenomenon refers to a phenomenon that when a crystalline substance containing a dopant is recrystallized after being melted, the concentrations of the dopant in the solid crystal is different from that in an uncrystallized liquid. During the growth of the stibium-phosphorus co-doped single crystal, the distributions of the stibium and phosphorus in the crystal are different due to the segregation coefficients of the stibium and phosphorus are different.

Specifically, the dopants of stibium and phosphorus in the silicon crystal lattice may cause a distortion of the silicon crystal lattice, thus affecting kinetics of a dislocation. At a high temperature, these dopant atoms may interact with a dislocation core to form complexes, and these complexes serve as pinning centers to inhibit a slide of the dislocation. However, the distributions of the stibium and phosphorus in the crystal may exhibit a certain gradient due to the different segregation coefficients of the stibium and phosphorus. For example, the segregation coefficient of phosphorus is relatively small, and it means that during the crystal growth, phosphorus atoms tend to be enriched more readily at the tail of the crystal. While the segregation coefficient of stibium is relatively large, and the distribution of the stibium may be more uniform or may have different characteristics.

In a stibium-phosphorus co-doped single crystal, due to the existence of two dopant elements, interactions between the two dopant elements will further affect the properties of the crystal. For example, the stibium and phosphorus may collectively affect the properties of the crystal, such as the conductivity and the mechanical strength, etc., by forming complexes or by altering actions of a dislocation.

Stibium-phosphorus co-doped semiconductors have excellent photoelectric performance and have wide application prospects in the fields of solar cells, light emitting diodes, lasers, etc. Especially in the field of solar cells, the phosphorus-stibium co-doped semiconductors can enhance the photoelectric conversion efficiency and improve the performance of the solar cell.

Most existing control methods depend on preset fixed growth parameters, and it is difficult for these methods to adapt to slight changes in an actual growth process, therefore these methods cannot monitor in real time and dynamically adjust growth parameters in the growth process, and lacks accuracy and controllability, and have difficult in achieving optimal resistivity distribution, thus resulting in uneven resistivity distribution and affecting device performance.

The embodiments of the invention aim to provide a method and a device for controlling crystal rod axial resistivity, a computer device and a computer product, which can at least ensure that an axial uniformity of dopant elements in the single-crystal silicon is improved in a crystal pulling process, thereby achieving an accurate control for the resistivity and improving the uniformity of the crystal rod axial resistivity.

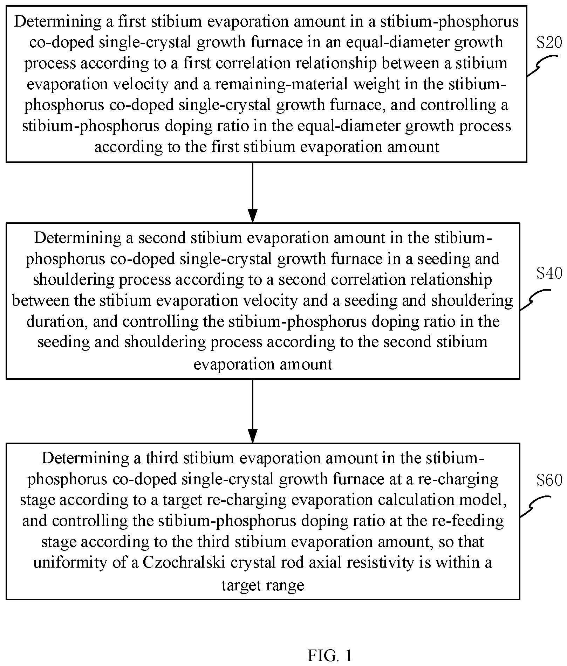

Referring to FIG. 1, in some embodiments, a method for controlling crystal rod axial resistivity is provided, and the method includes the following steps S20 to S60.

In Step S20, determine a first stibium evaporation amount in a stibium-phosphorus co-doped single-crystal growth furnace in an equal-diameter growth process according to a first correlation relationship between a stibium evaporation velocity and a remaining-material weight in the stibium-phosphorus co-doped single-crystal growth furnace, and control a stibium-phosphorus doping ratio in the equal-diameter growth process according to the first stibium evaporation amount.

In Step S40, determine a second stibium evaporation amount in the stibium-phosphorus co-doped single-crystal growth furnace in a seeding and shouldering process according to a second correlation relationship between a stibium evaporation velocity and a seeding and shouldering duration, and control the stibium-phosphorus doping ratio in the seeding and shouldering process according to the second stibium evaporation amount.

In Step S60, determine a third stibium evaporation amount in the stibium-phosphorus co-doped single-crystal growth furnace at a re-charging stage according to a target re-charging evaporation calculation model, and control the stibium-phosphorus doping ratio at the re-charging stage according to the third stibium evaporation amount, so that the uniformity of the Czochralski crystal rod axial resistivity is within a target range.

Exemplarily, the manufacturing process of the Czochralski silicon single crystal includes charging, melting, seeding, necking, shouldering, and isometric growth processes, and etc. In the method of the present application, the manufacturing process of the Czochralski stibium-+phosphorus co-doped silicon single crystal is adopted, and the characteristics that the stibium evaporation amount in the isometric growth process, in the seeding and shouldering process and at the re-charging stage has a great influence on the uniformity of the crystal rod axial resistivity, is utilized. Firstly, the first stibium evaporation amount in the stibium-phosphorus co-doped single-crystal growth furnace in the equal-diameter growth process is determined according to the first correlation relationship between the stibium evaporation velocity and the remaining-material weight in the stibium-phosphorus co-doped single-crystal growth furnace, and the stibium-phosphorus doping ratio in the equal-diameter growth process is controlled according to the first stibium evaporation amount, thereby ensuring an accurate doping of stibium elements in the isometric growth process. Then the second stibium evaporation amount in the stibium-phosphorus co-doped single-crystal growth furnace in the seeding and shouldering process is determined according to the second correlation relationship between the stibium evaporation velocity and the seeding and shouldering duration, and the stibium-phosphorus doping ratio in the seeding and shouldering process is controlled according to the second stibium evaporation amount, thereby ensuring the accurate doping of stibium elements in the seeding and shouldering process. Further, the third stibium evaporation amount in the stibium-phosphorus co-doped single-crystal growth furnace at the re-charging stage is determined according to the target re-charging evaporation calculation model , and the stibium-phosphorus doping ratio at the re-charging stage is controlled according to the third stibium evaporation amount, thereby ensuring the accurate doping of stibium elements at the re-charging stage, improving the axial uniformity of dopant elements in the single-crystal silicon in the crystal pulling process, and achieving the accurate control for the resistivity, so that uniformity of the Czochralski crystal rod axial resistivity is within the target range, thereby improving the uniformity of the crystal rod axial resistivity.

The diffusion behavior and stibium diffusion constant in the silicon single crystal are affected by various factors including temperature and doping concentration, and affected by other dopant elements. The doping of stibium affects the performance of the silicon single crystal through the interaction between the stibium and the dislocations, and the influence is important for the application and processing of the silicon single crystal, and especially has a key effect on improving the mechanical strength of silicon wafers and device performance in the manufacturing process of integrated circuits.

However, in the stibium-phosphorus co-doped crystal pulling process in the related art, the diffusion constants and evaporation velocity of phosphorus (P) and stibium (Sb) are fixed values as shown in Table 1 below.

Table 1

| Physical Property Parameter of P and Sb in Silicon | | | | | | | | | |
|---|---|---|---|---|---|---|---|---|---|
| Dopant Element | Atomic Radius | Relative Atomic Mass | Dopant Energy Level (eV) | Segregation Coefficient | Diffusion Constant (Solid Silicon at 1200 °C) cm$^2$/s | Evaporation Velocity (cm/s) | Maximum Solubility (atom/cm$^3$) | Doping Limit (atom/cm$^3$) | Corresponding Resistivity ($\Omega \cdot cm$) |
| P | 98 | 30.974 | 0.045 | 0.35 | $2.80 \times 10^{-12}$ | $1.00 \times 10^{-04}$ | $1.30 \times 10^{+21}$ | $2.80 \times 10^{+19}$ | 0.0025 |
| Sb | 133 | 121.76 | 0.039 | 0.023 | $2.70 \times 10^{-13}$ | $7.00 \times 10^{-02}$ | $7.00 \times 10^{+19}$ | $1.70 \times 10^{+19}$ | 0.004 |

As shown in Table 1, the diffusion constants and evaporation velocity of P and Sb in Table 1 are values obtained by detecting the solid silicon at 1200°C. In an actual Czochralski process, the temperature of P and Sb doped into the silicon melt is up to 1400°C or above, and the adaptability of the diffusion constants in Table 1 will be weakened, and diffusion constant of the phosphorus has been verified to be about $2.80 \times 10^{-5}$, which differs from the value in the table 1 by $10^7$.

In some embodiments of the present invention, determining the stibium diffusion constant in the silicon melt through multiple experiments mainly includes the following procedures.

Preparing sample: a silicon single crystal containing stibium is produced by the Czochralski method, and in the process, a preset amount of stibium is added into a silicon melt as a dopant and doped into silicon crystal lattices during a crystal growth.

Cooling and slicing: after a diffusion process, the silicon single crystal is slowly cooled to fix the distribution of the stibium atoms in the crystal lattices, and then the silicon single crystal is cut into multiple slices with sections for a subsequent resistivity measurement.

Processing and analyzing data: a four-point probe resistivity detector or a square resistance detector is used to detect and collect resistivity data of each section, and the stibium diffusion constant is calculated based on detected resistivity data, and a calculation process, such as for an effective segregation, is usually involved during the calculation, and the stibium diffusion constant is determined by fitting detected data with theoretical numerical values, and the stibium diffusion constant in the silicon melt is determined as $2.914 \times 10^{-6}$.

Verifying results: in order to ensure the accuracy of the experimental results, multiple experiments are performed to verify the accuracy of the data, and the influence of experimental conditions (such as a temperature, a pressure, and a purity of silicon and stibium) on the diffusion constant is also considered, so that the stibium diffusion constant in silicon melt is determined as $2.914 \times 10^{-6}$, and the current mass production requirements can be met.

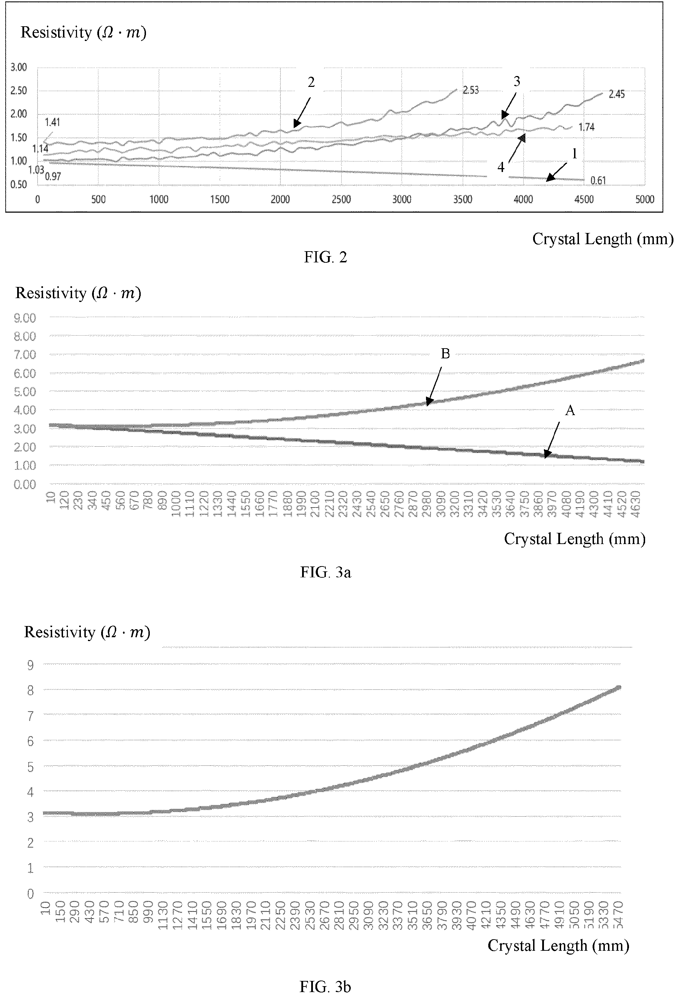

Referring to FIG. 2, in some embodiments, a preset state of the stibium-phosphorus co-doped single-crystal growth furnace includes a furnace pressure being a preset pressure value, and an argon flow rate being a preset flow rate. The method for controlling the crystal rod axial resistivity further includes obtaining the first correlation relationship between the stibium evaporation velocity and the remaining-material weight in the stibium-phosphorus co-doped single-crystal growth furnace, which specifically includes the following steps S12 to S18.

In Step S12, obtain a stibium diffusion constant after a preset amount of stibium is doped into the silicon melt in the single-crystal growth furnace in a preset state.

In Step S14, according to the stibium diffusion constant, a simulated distribution curve of the crystal rod axial resistivity caused by a stibium segregation under the condition that the resistivity at a starting position of pulling the crystal is a target value is calculated and simulated.

In Step S16, determine a measured distribution curve of the crystal rod axial resistivity according to the simulated distribution curve.

In Step S18, determine the first correlation relationship between the stibium evaporation velocity and the remaining-material weight by using a correlation analysis method according to the measured distribution curve of the crystal rod axial resistivity.

The step S12 of obtaining the stibium diffusion constant after the preset amount of stibium is doped into the silicon melt in the single-crystal growth furnace in the preset state includes: doping the preset amount of stibium into the silicon melt in the single-crystal growth furnace in the preset state; collecting data of axial resistivities of sections of the multiple slices of the Czochralski crystal rod, and calculating the stibium diffusion constant based on the collected data of the axial resistivities. Exemplarily, referring to the foregoing multiple experimental steps, in step S12, the stibium diffusion constant is determined as $2.914 \times 10^{-6}$.

For example, in the preset state, the preset pressure value of the furnace pressure is in a range from 3 Torr to 15 Torr, for example, the preset pressure value may be 3 Torr, 7 Torr, 12 Torr, or 15 Torr. The preset flow rate of the argon may be in a range from 30 slpm to 170 slpm, for example, the preset flow rate may be 30 slpm, 60 slpm, 90 slpm, 110 slpm, 140 slpm, 160 slpm, or 170 slpm. A size of the heat field in the single-crystal growth furnace is in a range from 28 inches to 42 inches, for example, the size of the heat field may be 28 inches, 32 inches, 36 inches, 40 inches, or 42 inches.

In step S14, a silicon single crystal containing stibium can be produced by the Czochralski method. In the Czochralski process, the preset amount of stibium is added into the silicon melt as a dopant and doped into the silicon crystal lattices in the crystal growth process, and the verification can be performed by a process of pulling and producing the silicon single crystal under three furnace pressures. Then the resulting crystal rod is cut at an interval of 50 mm in the axial direction to get multiple slices having sections, and the data of the axial resistivities of the crystal rod are detected at three points evenly distributed in the circumferential direction of a concentric circle of each section by using a portable four-point probe detector, to obtain the curve of the resistivity changing with the crystal length in FIG. 2, in which, the unit of resistivity on the vertical axis is $\Omega \cdot m$, and the unit of the crystal length on the horizontal axis is mm.

As shown in FIG. 2, a first straight line shows the axial resistivity distribution of the phosphorus-doped single crystal, and the first straight line shows that the axial resistivity of the phosphorus-doped single crystal is slightly affected by a change in the furnace pressure. Since the evaporation effect of the stibium is greater than the segregation effect of the stibium, the furnace pressure is reduced from 9.4 Torr to 2 Torr to obtain a second curve in FIG. 2, and the furnace pressure is maintained between 6 Torr and 7 Torr to obtain a third curve in FIG. 2, and the furnace pressure is increased from 7 Torr to 10 Torr to obtain a fourth curve in FIG. 2. Therefore, the stibium evaporation can be controlled by presetting a furnace pressure and argon parameters, which indicates that the evaporation effect of the stibium can be enhanced or inhibited by changing the furnace pressure or the argon parameters.

Exemplarily, in step S14, according to the stibium diffusion constant, the simulated distribution curve of the crystal rod axial resistivity caused by the stibium segregation under the condition that the resistivity at the starting position of pulling the crystal (i.e., a head-controlled resistivity) is the target value is calculated and simulated, and is shown in FIG. 3a, where the horizontal axis represents the crystal length with unit of mm, and the vertical axis represents the axial resistivity with unit of $\Omega \cdot m$. The curve $A$ in FIG. 3a represents the simulated distribution curve of the crystal rod axial resistivity caused by the stibium segregation. The curve $B$ in FIG. 3a represents the measured distribution curve of the crystal rod axial resistivity caused by the stibium segregation and stibium evaporation. In the actual process, the segregation effect of the stibium is less than the evaporation effect of the stibium, and the segregation effect of the stibium and the evaporation effect of the stibium corporately affect the distribution of the crystal rod axial resistivity.

Exemplarily, in the step S16 of determining the measured distribution curve of the crystal rod axial resistivity according to the simulated distribution curve, for example, an stibium evaporation velocity $E_v$ and an evaporation amount $N$ are calculated through simulation corresponding to different lengths which are along the axial direction, to obtain the simulated distribution curve of the crystal rod axial resistivity and the measured distribution curve of the crystal rod axial resistivity shown in FIG. 3b (these two curves substantially coincide in FIG. 3b), so that a fitting degree between the simulated distribution curve of the crystal rod axial resistivity and the measured distribution curve of the crystal rod axial resistivity shown in FIG. 3b is great than or equal to 99.8%.

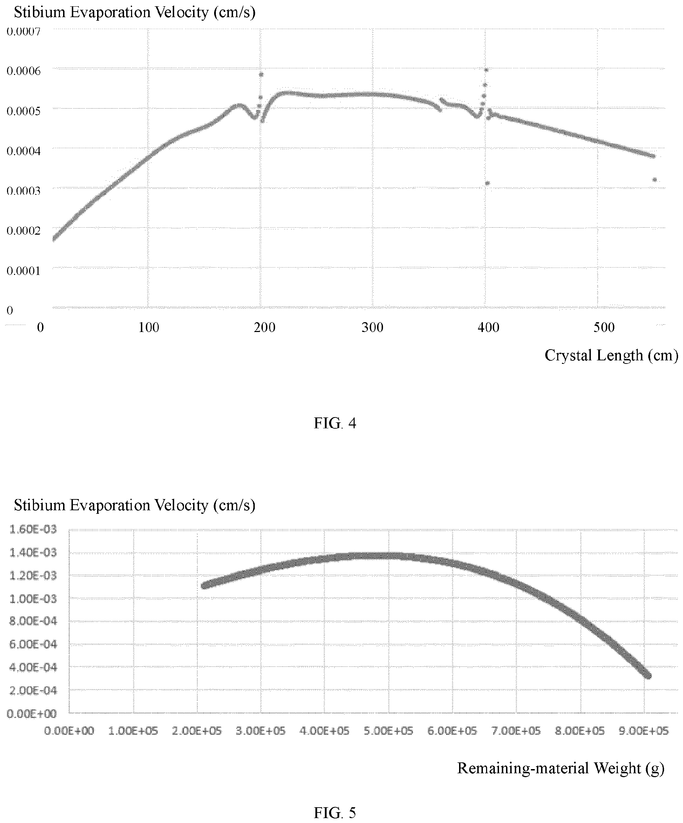

In the process of obtaining the simulated distribution curve of the crystal rod axial resistivity and the measured distribution curve of the crystal rod axial resistivity shown in FIG. 3b, the stibium evaporation velocities corresponding to different crystal lengths are as shown in FIG. 4.

Further, in step S18, the first correlation relationship between the stibium evaporation velocity $E_v$ and the remaining-material weight in the single-crystal growth furnace may be determined by using the correlation analysis method according to the measured distribution curve of the crystal rod axial resistivity shown in FIG. 3b and the curve of the stibium evaporation velocity changing with the crystal length shown in FIG. 4.

In the correlation analysis method, the correlated independent variables include background monitoring data of the furnace, such as a crystal length, a remaining-material weight, a set growth rate, a crystal growth rate, a power of a main heater, a diameter, an actual argon flow rate, a main chamber pressure, an actual crystal pulling speed, a crystal weight, a secondary chamber pressure, an output speed of crucible rotation, an output speed of crystal rotation, an average furnace pressure, an average liquid surface temperature, an actual crucible rotation speed, an actual crystal rotation speed, a secondary water flow rate in water cooling jacket, a liquid surface temperature, an isometric growth duration, and etc.

The first correlation relationship between the stibium evaporation velocity $E_v$ and at least one of the foregoing background monitoring data of the furnace is determined by using a statistical method. After the correlation analysis, the magnitude, direction and significance of the correlation coefficient need to be explained. A positive correlation coefficient indicates an increase in one variable with an increase in another variable, and a negative correlation coefficient indicates an increase in one variable with a decrease in another variable. The closer the absolute value of the correlation coefficient is to 1, the stronger the correlation is. A threshold of the significance level $P$ is typically set to be 0.05 or 0.01. The correlation is considered to be statistically significant if the significance level $P$ is less than the threshold 0.05 or 0.01. Based on the threshold of the significance level, the independent variables with the significance level $P \leq 0.05$ are identified as follows: the crystal length, the remaining-material weight, the actual argon flow rate, the main chamber pressure, the average liquid surface temperature, and the isometric growth duration.

Some constants are deleted through a regression analysis to obtain independent variables as follows: the actual argon flow rate, the main chamber pressure, and the average liquid surface temperature. Further, the crystal length and the isometric growth duration are deleted by a variance expansion factor (VIF) method, and finally the first correlation relationship between the stibium evaporation velocity and the remaining-material weight is established as follows:

$$E_v = a + bW + cW^2 + dW^3$$

In the above equation, $E_v$ represents the stibium evaporation velocity, $W$ represents a remaining-material weight, and $a, b, c$ and $d$ represent constants.

Based on the measured data of the same experiments corresponding to FIG. 3b and FIG. 4, the correlation curves of the remaining-material weight and the stibium evaporation velocity are shown in FIG. 5, in which the horizontal axis represents the remaining-material weight with unit of g, and the vertical axis represents the stibium evaporation velocity with unit of cm/s.

The values of the constants in the first correlation relationship are determined by using the correlation analysis method, and a specific function expression between the remaining-material weight and the stibium evaporation velocity is obtained:

$$Ev = 0.000301638354296996 - 2.847079761568 \times 10^{-11}W$$
$$+ 2.374013120331233 \times 10^{-15}W^2 - 2.82524056437763 \times 10^{-21}W^3$$

In some embodiments, determining the first stibium evaporation amount in the equal-diameter growth process includes calculating the first stibium evaporation amount $N_1$ according to a first calculation method, i.e., the following equation: $N_1 = E_v \times A \times C_1$

In the above equation, $Ev$ represents the stibium evaporation velocity, $A$ represents a stibium evaporation surface area, and $C_1$ represents a stibium concentration in the single-crystal growth furnace.

In the foregoing embodiments, it is determined that the stibium evaporation velocity is mainly correlated with the remaining-material weight by using the correlation analysis method. After a large quantity of actual data are obtained, the values of the constants in the first correlation relationship are determined, and the function expression of the first correlation relationship is determined, so that the corresponding stibium evaporation velocity is accurately calculated according to the real-time remaining-material weight in the single-crystal growth furnace and the first correlation relationship, and the first stibium evaporation amount in the Czochralski equal-diameter growth process is accurately calculated according to the stibium evaporation velocity and the correlation relationship between the stibium evaporation amount and the stibium evaporation velocity in the Czochralski equal-diameter growth process, thereby accurately and dynamically determine the first stibium evaporation amount in the Czochralski equal-diameter growth process.

The stibium diffusion constant in the silicon melt affects the distribution and concentration of the stibium in the silicon melt, which in turn affects the growth rate and quality of the single crystal. Experiments show that the stibium diffusion constant in the silicon melt is related to factors such as a kinematic viscosity coefficient and a relative rotation speed of the silicon melt, and the diffusion constant may be determined under specific growth conditions. Therefore, by setting the furnace pressure as the preset pressure value and setting the argon flow rate as the preset flow rate, multiple experiments are carried out to obtain the stibium diffusion constant after the preset amount of stibium is doped into the silicon melt in the single-crystal growth furnace in the preset state, and it is determined that the stibium diffusion constant and the corresponding growth parameters can meet the requirements of current mass production. Then, according to the stibium diffusion constant, a simulated distribution curve of the crystal rod axial resistivity caused by the stibium segregation under the condition that the resistivity at the starting position of pulling the crystal is the target value is calculated and simulated, and the measured distribution curve of the crystal rod axial resistivity is determined according to the simulated distribution curve, so that the fitting degree of the measured distribution curve of the crystal rod axial resistivity and the simulated distribution curve is greater than or equal to the preset threshold. Then the first correlation relationship between the stibium evaporation velocity and the remaining-material weight in the single-crystal growth furnace is determine by using the correlation analysis method according to the measured distribution curve of the crystal rod axial resistivity, so that the corresponding stibium evaporation velocity can be accurately calculated according to the real-time remaining-material weight in the single-crystal growth furnace and the first correlation relationship, thereby accurately calculating the first stibium evaporation amount in the Czochralski isometric growth process.

Compared with the calculation of the first stibium evaporation amount $N_1$ in the Czochralski equal-diameter growth process, in other crystal pulling processes and stages, the changes in the remaining-material weight, power, furnace pressure and argon flow rate in the single-crystal growth furnace are relatively small, so that under the condition that the latent heat of evaporation is considered, a second calculation method, which is different from the first calculation method for calculating the stibium evaporation amount in the equal-diameter growth process, is used to calculate the second stibium evaporation amount $N_2$:

$$C = C_0 \times e^{-E_v A/U}$$

$$N_2 = (C_0 - C) \times V$$

In the above equations, $C$ represents a stibium concentration after the stibium evaporation, e is a constant and represents the base of natural logarithms, $C_0$ represents a stibium concentration after a duration $t$, $E_v$ represents the stibium evaporation velocity, $A$ represents the stibium evaporation surface area, $U$ represents a silicon mass in the single-crystal growth furnace, and $V$ represents a remaining-material volume in the single-crystal growth furnace.

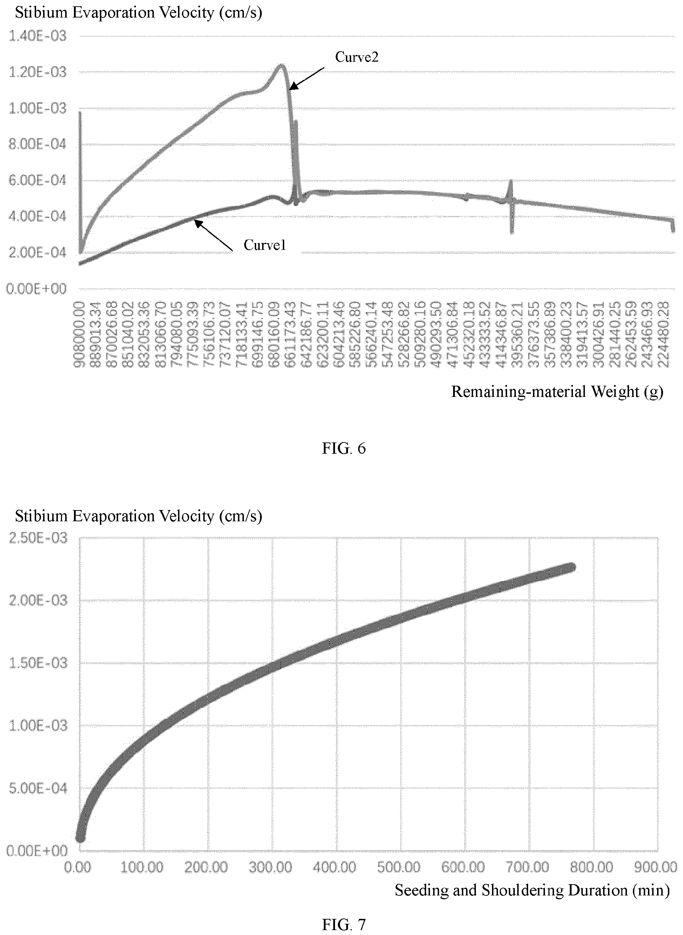

As the temperature of water increases, the latent heat of evaporation gradually decreases, and the evaporation difficulty of the water increases. The stibium evaporation phenomenon is similar as the water evaporation phenomenon. The change of the stibium evaporation velocity in the Czochralski equal-diameter growth process is calculated and simulated by using the data obtained under the conditions of the experiments above to obtain the result shown in FIG. 6. FIG. 6 illustrates a curve *Curve1* which shows the stibium evaporation velocity changing with the remaining-material weight and is simulated and calculated according to the first calculation method, and a curve *Curve2* which shows the stibium evaporation velocity changing with the remaining-material weight and is simulated and calculated according to the second calculation method. In the figure, the horizontal axis represents the remaining-material weight with unit of g, and the vertical axis represents the stibium evaporation velocity with unit of cm/s. The stibium evaporation velocities in a front region obtained by the two calculation methods are obviously different. The stibium evaporation velocities in a back region are basically coincide, and the difference therebetween is caused by the latent heat of evaporation of the stibium in the silicon, and a change relationship of the latent heat of evaporation of the stibium in the silicon is a similar to that of the latent heat of evaporation of water.

Since the temperature in the crystal pulling process other than the Czochralski equal-diameter growth process is substantially constant, for example, the temperature in the Czochralski seeding and shouldering process is a preset temperature value, before determining the second stibium evaporation amount in the stibium-phosphorus co-doped single-crystal growth furnace in the seeding and shouldering process according to the second correlation relationship between the stibium evaporation velocity and the seeding and shouldering duration, the method for controlling crystal rod axial resistivity of the present application further includes obtaining the second correlation relationship between the stibium evaporation velocity and the seeding and shouldering duration, which specifically includes the following steps S42 and S44.

In Step S42, obtain a curve of the stibium evaporation velocity changing with the seeding and shouldering duration in the single-crystal growth furnace.

In Step S44, determine a function expression between the stibium evaporation velocity and the seeding and shouldering duration according to the curve of the stibium evaporation velocity changing with the seeding and shouldering duration in the single-crystal growth furnace. The second correlation relationship includes the function expression.

In the method for controlling the crystal rod axial resistivity in the above embodiment, since the temperature of the other crystal pulling processes other than the Czochralski equal-diameter growth process is basically constant, after the curve of the stibium evaporation velocity changing with the seeding and shouldering duration in the single-crystal growth furnace is obtained, the function expression between the stibium evaporation velocity and the seeding and shouldering duration can be determined according to the curve, so that a current stibium evaporation velocity in the Czochralski seeding and shouldering process can be accurately calculated according to the function expression and the real-time seeding and shouldering duration, and the second stibium evaporation amount in the Czochralski seeding and shouldering process can be accurately calculated or determined according to the current stibium evaporation velocity and the correlation relationship between the stibium evaporation amount in the Czochralski seeding and shouldering process and the stibium concentration after the stibium evaporation.

The curve of the stibium evaporation velocity changing with the seeding and shouldering duration in the Czochralski seeding and shouldering process can be calculated and simulated by using the data obtained under the conditions of the experiments above, as shown in FIG. 7. In FIG. 7, the horizontal axis represents the seeding and shouldering duration with unit of min, and the vertical axis represents the stibium evaporation velocity with unit of cm/s.

In some embodiments, determining the function expression between the stibium evaporation velocity and the seeding and shouldering duration includes determining values of the constants in the following equation: $E_v = m \times t^n$

In the above equation, $E_v$ represents the stibium evaporation velocity, $t$ represents the seeding and shouldering duration, and $m$ and $n$ both represent constants.

According to the method for controlling the crystal rod axial resistivity in the above embodiment, after determining that the stibium evaporation velocity in the Czochralski seeding and shouldering process is mainly correlated with the seeding and shouldering duration, the values of the constants in the function expression between the stibium evaporation velocity and the seeding and shouldering duration can be determined according to a large amount of actual data, thereby determining the specific function expression between the stibium evaporation velocity and the seeding and shouldering duration in the Czochralski seeding and shouldering process.

Exemplarily, after determining that the stibium evaporation velocity in the Czochralski seeding and shouldering process is mainly correlated with the seeding and shouldering duration, the values of the constants in the function expression between the stibium evaporation velocity and the seeding and shouldering duration may be fitted and determined according to the curve shown in FIG. 7, so that a specific function expression between the stibium evaporation velocity $E_v$ and the seeding and shouldering duration $t$ in the Czochralski seeding and shouldering process is determined as follows:

$$E_v = 0.000104194 \times t^{0.463774}$$

In some embodiments, according to the first correlation relationship between the stibium evaporation velocity and the remaining-material weight in the single-crystal growth furnace and the first calculation method, the optimal stibium-phosphorus doping ratio is calculated by using the least square method. Combining with the function expression between the stibium evaporation velocity and the seeding and shouldering duration, The current stibium evaporation velocity in the Czochralski seeding and shouldering process can be accurately calculated according to the function expression and the real-time seeding and shouldering duration, and the second stibium evaporation amount in the Czochralski seeding and shouldering process is accurately calculated or determined according to the current stibium evaporation velocity and the correlation relationship between the stibium evaporation amount in the Czochralski seeding and shouldering process and the stibium concentration after the stibium evaporation, so as to realize the optimal control for the axial resistivity in the Czochralski equal-diameter growth process and the Czochralski seeding and shouldering process in the stibium-phosphorus co-doping process.

Both the Czochralski equal-diameter growth process and the Czochralski seeding and shouldering process are relatively fixed and repeated, and compared with the calculation of the stibium evaporation amount in the Czochralski equal-diameter growth process and the calculation of the stibium evaporation amount in the Czochralski seeding and shouldering process, since the re-charging stage is diverse, the calculation of the stibium evaporation amount at the re-charging stage is affected by various factors such as the remaining-material weight, the remaining-stibium concentration, the re-charging material amount, the furnace pressure and the temperature in the single-crystal growth furnace.

In some embodiments, before determining the third stibium evaporation amount in the stibium-phosphorus co-doped single-crystal growth furnace at the re-charging stage according to the target re-charging evaporation calculation model , the method for controlling crystal rod axial resistivity according to the present application further includes obtaining the target re-charging evaporation calculation model, which specifically includes steps S52 to S56.

In Step S52, determine an irrelevant variable at the re-charging stage by using a correlation analysis algorithm, wherein a correlation degree between irrelevant variable and the stibium evaporation amount at the re-charging stage is less than a preset threshold.

In Step S54, determine a target variable correlated with the stibium evaporation amount at the re-charging stage according to the irrelevant variable. The target variable includes the stibium concentration when the single crystal ridge is broken, the remaining-material weight and the re-charging duration.

In Step S56, determine a functional relationship between the stibium evaporation amount and the target variable by using a linear fitting algorithm to obtain the target re-charging evaporation calculation model.

Exemplarily, the irrelevant variable at the re-charging stage is determined by using the correlation analysis algorithm, wherein the correlation degree between the irrelevant variable and the stibium evaporation amount at the re-charging stage is less than the preset threshold, so that the target variable correlated with the stibium evaporation amount at the re-charging stage is determined according to the irrelevant variable. The target variable includes the stibium concentration when the single crystal ridge is broken, the remaining-material weight and the re-charging duration. Then the functional relationship between the stibium evaporation amount and the target variable is determined by using the linear fitting algorithm, so that the third stibium evaporation amount at the re-charging stage in the stibium-phosphorus co-doped single-crystal growth furnace can be determined according to the function relationship, and the stibium-phosphorus doping ratio at the re-charging stage is controlled according to the third stibium evaporation amount, thereby ensuring the accurate doping of stibium elements at the re-charging stage.

After collecting a large quantity of related data, a correlation analysis is performed and irrelevant variables are removed, to determine the relationship between the stibium evaporation amount Y (unit: atoms) and three variables including the stibium concentration (unit: atoms/cm$^3$) when the single crystal ridge is broken and the remaining-material weight (unit: kg) and the re-charging duration (unit: min) as shown in Table 2.

A simulated result (the simulated stibium evaporation amount) is obtained based on a correlation model of the stibium evaporation amount and the target variable (including the stibium concentration when the single crystal ridge is broken, the remaining-material weight, and the re-charging duration), and the average deviation between the stibium evaporation amount Y and the simulated result is less than or equal to 1%, which meets the use requirements. However, in the correlation model of the stibium evaporation amount and the target variable (including the stibium concentration when the single crystal ridge is broken, the remaining-material weight, and the re-charging duration), the relationship between three independent variables (including the stibium concentration when the single crystal ridge is broken, the remaining-material weight, and the re-charging duration) and one dependent variable Y (the stibium evaporation amount) is involved. The correlation model is obtained by training, and when the amount of original data for training is small, and the deviation calculated based on the untrained correlation model may reach 50% or above, which is inconvenient for actual production and use.

Table 2

| Residual-Material Weight (Kg) | Stibium Concentration when single crystal ridge is broken (atoms/cm³) | Residual-Material Weight (Kg) | Re-Charging TIme (min) | Stibium Evaporation AMount (atoms) | Simulated Result (atoms) | Deviation |
|---|---|---|---|---|---|---|
| 0-655 | 9.59864E+16 | 539.477 | 430 | 1.51565E+22 | 1.54831E+22 | -2.15% |
| | 1.64078E+17 | 595.813 | 374 | 3.71445E+22 | 3.74779E+22 | -0.90% |
| | 1.34702E+17 | 647.384 | 346 | 3.12648E+22 | 3.16038E+22 | -1.08% |
| | 1.49606E+17 | 665.538 | 339 | 2.09083E+22 | 2.12492E+22 | -1.63% |
| | | | | | | |
| 655-855 | 1.49606E+17 | 665.538 | 339 | 2.09083E+22 | 2.09E+22 | 0% |
| | 1.54E+17 | 763.5 | 276 | 1.44E+22 | 1.49E+22 | -4% |
| | 1.64021E+17 | 855.532 | 206 | 194017E+22 | 1.94E+22 | 0% |
| | | | | | | |
| >855 | 1.64021E+17 | 855.532 | 206 | 1.94017E+22 | 1.94486E+22 | -0.24% |
| | 1.55121E+17 | 866.601 | 199 | 2.2173E+22 | 2.22201E+22 | -0.21% |
| | 2.2816E+17 | 882 | 193 | 2.82772E+22 | 2.83248E+22 | -0.17% |
| | 1.88639E+17 | 891.151 | 172 | 234223E+22 | 2.14695E+22 | -0.22% |

Preferably, a relationship between the remaining-material weight and a third stibium evaporation amount is established, and a correlation analysis method may be used to determine values of constants in the following target re-charging evaporation calculation model: $P = i + kQ$

In the above equation, $P$ represents the third stibium evaporation amount, Q represents remaining-material weight at the re-charging stage, and $i$ and $k$ are both constants.

The specific function expression of the remaining-material weight and the third stibium evaporation amount can be determined by a correlation fitting algorithm to be

$$P = 1.1891 - 0.001Q$$

According to the method for controlling the crystal rod axial resistivity in the above embodiment, by establishing the specific function expression between the stibium evaporation amount and the target variable, the third stibium evaporation amount in the stibium-phosphorus co-doped single-crystal growth furnace at the re-charging stage can be determined according to the specific function expression, and the calculation complexity of the determination algorithm and the time consumption of the calculation can be reduced, and the stibium-phosphorus doping ratio at the re-charging stage can be controlled according to the third stibium evaporation amount, thereby ensuring the accurate doping of stibium elements at the re-charging stage.

Referring to Table 3, according to the first correlation relationship between the stibium evaporation velocity and the remaining-material weight in the single-crystal growth furnace and the first calculation method, the optimal stibium-phosphorus doping ratio for preparing the N-type single-crystal silicon by using the Czochralski method is calculated by using the least square method. The current stibium evaporation velocity in the Czochralski seeding and shouldering process can be accurately calculated according to the function expression and the real-time seeding and shouldering duration combining with the function expression between the stibium evaporation velocity and the seeding and shouldering duration, so that the second stibium evaporation amount in the Czochralski seeding and shouldering process can be accurately calculated or determined according to the current stibium evaporation velocity and according to the correlation relationship between the stibium evaporation amount in the Czochralski seeding and shouldering process and the stibium concentration after the stibium evaporation, thereby ensuring the accurate doping of the stibium element in the seeding and shouldering process. Further, the third stibium evaporation amount in the stibium-phosphorus co-doped single-crystal growth furnace at the re-charging stage is determined according to the target re-charging evaporation calculation model, and the stibium-phosphorus doping ratio at the re-charging stage is controlled according to the third stibium evaporation amount, thereby ensuring the accurate doping of the stibium element at the re-charging stage. The crystal rod axial resistivity finally obtained is in a range from 0.952 $\Omega \cdot m$ to 0.964 $\Omega \cdot m$, thereby effectively realizing the optimal control for the crystal rod axial resistivity in the stibium-phosphorus co-doped single-crystal growth furnace.

Table 3

| Resistivity ($\Omega \cdot m$) | Pulling Velocity of Crystal Silicon (mm/min) | Evaporation Velocity | Remaining-Material Weight (g) |
|---|---|---|---|
| 0.964 | 1.8 | 9.20E-05 | 918734.223 |
| 0.964 | 1.8 | 9.55E-05 | 917468.445 |
| 0.963 | 1.8 | 9.90E-05 | 916202.668 |
| 0.962 | 1.8 | 1.03E-04 | 914936.891 |
| 0.961 | 1.8 | 1.06E-04 | 913671.114 |
| 0.96 | 1.8 | 1.10E-04 | 912405.336 |
| 0.959 | 1.8 | 1.13E-04 | 911139.559 |
| 0.958 | 1.8 | 1.16E-04 | 909873.782 |
| 0.958 | 1.8 | 1.20E-04 | 908608.005 |
| 0.957 | 1.8 | 1.23E-04 | 907342.227 |
| 0.956 | 1.8 | 1.27E-04 | 906076.45 |
| 0.956 | 1.8 | 1.30E-04 | 904810.673 |
| 0.955 | 1.8 | 1.33E-04 | 903544.896 |
| 0.954 | 1.8 | 1.37E-04 | 902279.118 |
| 0.954 | 1.8 | 1.40E-04 | 901103.341 |
| 0.953 | 1.8 | 1.43E-04 | 899747.564 |
| 0.952 | 1.8 | 1.47E-04 | 898481.786 |
| 0.952 | 1.8 | 1.50E-04 | 895950.232 |

It should be understood that although the steps in the flowchart of FIG. 1 are sequentially displayed as indicated by arrows, these steps are not necessarily performed sequentially according to the sequence instructed by the arrows. Unless otherwise explicitly specified in this specification, execution of the steps is not strictly limited, and the steps may be performed in other sequences. Moreover, at least some of the steps in FIG. 1 may include a plurality of sub-steps or a plurality of stages. The steps or stages are not necessarily performed simultaneously but may be performed at different moments. Execution of the steps or stages is not necessarily sequentially performed, but may be performed alternately with other steps or with at least some of sub-steps or stages of other steps.

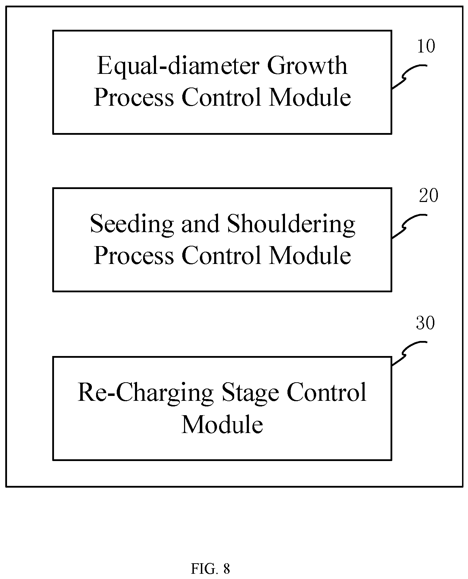

Referring to FIG. 8, in some embodiments, a device for controlling crystal rod axial resistivity is provided, and the device includes an equal-diameter growth process control module 10, a seeding and shouldering process control module 20, and a re-charging stage control module 30. The equal-diameter growth process control module 10 is configured to determine a first stibium evaporation amount in a stibium-phosphorus co-doped single-crystal growth furnace in an equal-diameter growth process according to a first correlation relationship between a stibium evaporation velocity and a remaining-material weight in the stibium-phosphorus co-doped single-crystal growth furnace, and control a stibium-phosphorus doping ratio in the equal-diameter growth process according to the first stibium evaporation amount. The seeding and shouldering process control module 20 is configured to determine a second stibium evaporation amount in the stibium-phosphorus co-doped single-crystal growth furnace in a seeding and shouldering process according to a second correlation relationship between a stibium evaporation velocity and a seeding and shouldering duration, and control the stibium-phosphorus doping ratio in the seeding and shouldering process according to the second stibium evaporation amount. The re-charging stage control module 30 is configured to determine a third stibium evaporation amount in the stibium-phosphorus co-doped single-crystal growth furnace at a re-charging stage according to a target re-charging evaporation calculation model, and control the stibium-phosphorus doping ratio at the re-charging stage according to the third stibium evaporation amount, so that the uniformity of the Czochralski crystal rod axial resistivity is within a target range.

Referring to FIG. 8, the manufacturing process of the Czochralski silicon single crystal includes charging, melting, seeding, necking, shouldering, and isometric growth processes, and etc. In the device of the present application, the manufacturing process of the Czochralski stibium-phosphorus co-doped silicon single crystal is adopted, and the characteristics that the stibium evaporation amount in the isometric growth process, in the seeding and shouldering process and at the re-charging stage has a great influence on the uniformity of the crystal rod axial resistivity is utilized. Firstly, based on the equal-diameter growth process control module 10, the first stibium evaporation amount in the stibium-phosphorus co-doped single-crystal growth furnace in the equal-diameter growth process is determined according to the first correlation relationship between the stibium evaporation velocity and the remaining-material weight in the stibium-phosphorus co-doped single-crystal growth furnace, and the stibium-phosphorus doping ratio in the equal-diameter growth process is controlled according to the first stibium evaporation amount, thereby ensuring an accurate doping of stibium elements in the isometric growth process. Then based on the seeding and shouldering process control module 20, the second stibium evaporation amount in the stibium-phosphorus co-doped single-crystal growth furnace in the seeding and shouldering process is determined according to the second correlation relationship between the stibium evaporation velocity and the seeding and shouldering duration, and the stibium-phosphorus doping ratio in the seeding and shouldering process is controlled according to the second stibium evaporation amount, thereby ensuring the accurate doping of stibium elements in the seeding and shouldering process. Further, based on the re-charging stage control module 30, the third stibium evaporation amount in the stibium-phosphorus co-doped single-crystal growth furnace at the re-charging stage is determined according to the target re-charging evaporation calculation model , and the stibium-phosphorus doping ratio at the re-charging stage is controlled according to the third stibium evaporation amount, thereby ensuring the accurate doping of stibium elements at the re-charging stage, improving the axial uniformity of dopant elements in the single-crystal silicon in the crystal pulling process, and achieving the accurate control for the resistivity, so that uniformity of the Czochralski crystal rod axial resistivity is within the target range, thereby improving the uniformity of the crystal rod axial resistivity.

In some embodiments, the device for controlling the crystal rod axial resistivity further includes a re-delivery evaporation calculation model obtaining module configured to: determine an irrelevant variable at the re-charging stage by using a correlation analysis algorithm, wherein a correlation degree between the irrelevant variable and the stibium evaporation amount at the re-charging stage is less than a preset threshold; determine a target variable correlated with the stibium evaporation amount at the re-charging stage according to the irrelevant variable, where the target variable includes the stibium concentration when the single crystal ridge is broken, the remaining-material weight and the re-charging duration; and determine a functional relationship between the stibium evaporation amount and the target variable by using a linear fitting algorithm.

According to the device for controlling crystal rod axial resistivity in the above embodiment, the irrelevant variable at the re-charging stage is determined by using a correlation analysis algorithm, wherein the correlation degree between the irrelevant variable and the stibium evaporation amount at the re-charging stage is less than the preset threshold, so that the target variable correlated with the stibium evaporation amount at the re-charging stage is determined according to the irrelevant variable. The target variable includes the stibium concentration when the single crystal ridge is broken, the remaining-material weight and the re-charging duration. Then the functional relationship between the stibium evaporation amount and the target variable is determined by using the linear fitting algorithm, so that the third stibium evaporation amount at the re-charging stage in the stibium-phosphorus co-doped single-crystal growth furnace can be determined according to the function relationship, and the stibium-phosphorus doping ratio at the re-charging stage is controlled according to the third stibium evaporation amount, thereby ensuring the accurate doping of stibium elements at the re-charging stage.

In some embodiments, a preset state of the stibium-phosphorus co-doped single-crystal growth furnace includes a furnace pressure being a preset pressure value, and an argon flow rate being a preset flow rate. The device for controlling the crystal rod axial resistivity of the present application further includes a first correlation relationship obtaining module configured to obtain a stibium diffusion constant after a preset amount of stibium is doped into the silicon melt in the single-crystal growth furnace in a preset state; calculate and simulate a simulated distribution curve of the crystal rod axial resistivity caused by a stibium segregation under the condition that the resistivity at a starting position of pulling the crystal is a target value according to the stibium diffusion constant; determine a measured distribution curve of the crystal rod axial resistivity according to the simulated distribution curve; and determine the first correlation relationship between the stibium evaporation velocity and the remaining-material weight by using a correlation analysis method according to the measured distribution curve of the crystal rod axial resistivity.

By setting the furnace pressure as the preset pressure value and setting the argon flow rate as the preset flow rate, multiple experiments are carried out to obtain the stibium diffusion constant after the preset amount of stibium is doped into the silicon melt in the single-crystal growth furnace in the preset state, and it is determined that the stibium diffusion constant and the corresponding growth parameters can meet the requirements of current mass production. Then, according to the stibium diffusion constant, a simulated distribution curve of the crystal rod axial resistivity caused by the stibium segregation under the condition that the resistivity at the starting position of pulling the crystal is the target value is calculated and simulated, and the measured distribution curve of the crystal rod axial resistivity is determined according to the simulated distribution curve, so that the fitting degree of the measured distribution curve of the crystal rod axial resistivity and the simulated distribution curve is greater than or equal to the preset threshold. Then the first correlation relationship between the stibium evaporation velocity and the remaining-material weight is determine by using the correlation analysis method according to the measured distribution curve of the crystal rod axial resistivity, so that the corresponding stibium evaporation velocity can be accurately calculated according to the real-time remaining-material weight in the single-crystal growth furnace and the first correlation relationship, thereby accurately calculating the first stibium evaporation amount in the Czochralski isometric growth process.

In some embodiments, the temperature of the Czochralski process is a preset temperature value. The device for controlling crystal rod axial resistivity further includes a second correlation obtaining module configured to: obtain a curve of the stibium evaporation velocity changing with the seeding and shouldering duration in the single-crystal growth furnace, and determine a function expression between the stibium evaporation velocity and the seeding and shouldering duration according to the curve of the stibium evaporation velocity changing with the seeding and shouldering duration in the single-crystal growth furnace. Since the temperature of the other crystal pulling processes other than the Czochralski equal-diameter growth process is basically constant, after the curve of the stibium evaporation velocity changing with the seeding and shouldering duration in the single-crystal growth furnace is obtained, the function expression between the stibium evaporation velocity and the seeding and shouldering duration can be determined according to the curve, so that a current stibium evaporation velocity in the Czochralski seeding and shouldering process can be accurately calculated according to the function expression and the real-time seeding and shouldering duration, and the second stibium evaporation amount in the Czochralski seeding and shouldering process can be accurately calculated or determined according to the current stibium evaporation velocity and the correlation relationship between the stibium evaporation amount in the Czochralski seeding and shouldering process and the stibium concentration after the stibium evaporation.

Exemplarily, a device for controlling crystal rod axial resistivity may be applied to the fields of solar cells, light emitting diodes, lasers and the like.

In some embodiments of the invention, a computer device is provided. The computer device includes a memory and a processor. The memory has a computer program stored thereon, and the processor, when executing the computer program, executes the steps of the method for controlling crystal rod axial resistivity of any embodiment of the present invention.

In some embodiments of the present invention, a control apparatus for controlling crystal rod axial resistivity is provided, and the control apparatus includes a memory and a processor. The memory has a computer program stored thereon. The processor, when executing the computer program, executes the steps of the method for controlling crystal rod axial resistivity of any embodiment of the present invention.

In some embodiments of the present disclosure, a computer readable storage medium is provided, having a computer program stored thereon. The computer program, when executed by a processor, causes the processor to execute the steps of the method for controlling crystal rod axial resistivity of any embodiment of the present invention.

In some embodiments of the present disclosure, a computer program product is provided. The computer program product includes a computer program. The computer program, when executed by a processor, implements steps of the method for controlling crystal rod axial resistivity of any embodiment of the present invention.

The technical features in the foregoing embodiments may be randomly combined. For concise description, not all possible combinations of the technical features in the embodiments are described. However, provided that combinations of the technical features do not conflict with each other, the combinations of the technical features are considered as falling within the scope described in this specification.

## Claims

1. A method for controlling crystal rod axial resistivity, **characterized by** comprising:

determining a first stibium evaporation amount in a stibium-phosphorus co-doped single-crystal growth furnace in an equal-diameter growth process according to a first correlation relationship between a stibium evaporation velocity and a remaining-material weight in the stibium-phosphorus co-doped single-crystal growth furnace, and controlling a stibium-phosphorus doping ratio in the equal-diameter growth process according to the first stibium evaporation amount;

determining a second stibium evaporation amount in the stibium-phosphorus co-doped single-crystal growth furnace in a seeding and shouldering process according to a second correlation relationship between the stibium evaporation velocity and a seeding and shouldering duration, and controlling the stibium-phosphorus doping ratio in the seeding and shouldering process according to the second stibium evaporation amount; and

determining a third stibium evaporation amount in the stibium-phosphorus co-doped single-crystal growth furnace at a re-charging stage according to a target re-charging evaporation calculation model, and controlling the stibium-phosphorus doping ratio at the re-charging stage according to the third stibium evaporation amount, so that uniformity of a Czochralski crystal rod axial resistivity is within a target range.

2. The method for controlling crystal rod axial resistivity according to claim 1, wherein before determining the third stibium evaporation amount in the stibium-phosphorus co-doped single-crystal growth furnace at the re-charging stage according to the target re-charging evaporation calculation model, the method further comprises:

determining an irrelevant variable at the re-charging stage by using a correlation analysis algorithm, wherein a correlation degree between the irrelevant variable and the stibium evaporation amount at the re-charging stage is less than a preset threshold;
determining a target variable correlated with the stibium evaporation amount at the re-charging stage according to the irrelevant variable, wherein the target variable comprises a stibium concentration when a single crystal ridge is broken, the remaining-material weight and a re-charging duration; and
determining a functional relationship between the stibium evaporation amount and the target variable by using a linear fitting algorithm to obtain the target re-charging evaporation calculation model.

3. The method for controlling crystal rod axial resistivity according to claim 1 or 2, wherein the target re-charging evaporation calculation model is:

$$P = i + kQ$$

wherein $P$ represents the third stibium evaporation amount, $Q$ represents the remaining-material weight at the re-charging stage, and $i$ and $k$ represent constants, determined by using a correlation analysis method.

4. The method for controlling crystal rod axial resistivity according to any one of claims 1 to 3, wherein a preset state of the stibium-phosphorus co-doped single-crystal growth furnace comprises a furnace pressure being a preset pressure value, and an argon flow rate being a preset flow rate; and
before determining the first stibium evaporation amount in the stibium-phosphorus co-doped single-crystal growth furnace in the equal-diameter growth process according to the first correlation relationship between the stibium evaporation velocity and the remaining-material weight in the stibium-phosphorus co-doped single-crystal growth furnace, the method further comprises:

obtaining a stibium diffusion constant after a preset amount of stibium is doped into a silicon melt in the single-crystal growth furnace in the preset state;
according to the stibium diffusion constant, calculating and simulating a simulated distribution curve of the crystal rod axial resistivity caused by a stibium segregation under a condition that a resistivity at a starting position of pulling a crystal is a target value;
determining a measured distribution curve of the crystal rod axial resistivity according to the simulated distribution curve; and
determining the first correlation relationship between the stibium evaporation velocity and the remaining-material weight by using a correlation analysis method according to the measured distribution curve of the crystal rod axial resistivity.

5. The method for controlling crystal rod axial resistivity according to claim 4, wherein obtaining the stibium diffusion constant after the preset amount of stibium is doped into the silicon melt in the single-crystal growth furnace in the preset state comprises:

doping the preset amount of stibium into the silicon melt in the single-crystal growth furnace in the preset state; and
collecting data of axial resistivities of sections of multiple slices of the Czochralski crystal rod, and calculating the stibium diffusion constant based on the collected data of the axial resistivities.

6. The method for controlling crystal rod axial resistivity according to claim 5, wherein collecting the data of axial resistivities of the sections of the multiple slices of the Czochralski crystal rod comprises:

cutting the crystal rod at an interval of 50 mm in an axial direction to get the multiple slices having sections; and
measuring each of the data of the axial resistivities of the sections at three points evenly distributed in a circumferential direction of a concentric circle of each of the sections of the multiple slices.

7. The method for controlling crystal rod axial resistivity according to any one of claims 4 to 6, wherein the preset pressure value is in a range from 3 Torr to 15 Torr.

8. The method for controlling crystal rod axial resistivity according to any one of claims 4 to 7, wherein the preset flow rate is in a range from 30 slpm to 170 slpm.

9. The method for controlling crystal rod axial resistivity according to any one of claims 1 to 8, wherein the first correlation relationship between the stibium evaporation velocity and the remaining-material weight in the equal-diameter growth process is:

$$E_v = a + bW + cW^2 + dW^3$$

$E_v$ represents the stibium evaporation velocity in the equal-diameter growth process, $W$ represents the remaining-material weight in the equal-diameter growth process, and $a$, $b$, $c$ and $d$ represent constants, determined by using a correlation analysis method.

10. The method for controlling crystal rod axial resistivity according to any one of claims 1 to 9, wherein a temperature in the seeding and shouldering process is a preset temperature value;
before determining the second stibium evaporation amount in the stibium-phosphorus co-doped single-crystal growth furnace in the seeding and shouldering process according to the second correlation relationship between the stibium evaporation velocity and the seeding and shouldering duration, the method for controlling crystal rod axial resistivity further comprises:

obtaining a curve of the stibium evaporation velocity changing with the seeding and shouldering duration in the single-crystal growth furnace in the seeding and shouldering process; and
determining a function expression between the stibium evaporation velocity and the seeding and shouldering duration according to the curve of the stibium evaporation velocity changing with the seeding and shouldering duration;
wherein the second correlation relationship is the function expression.

11. The method for controlling crystal rod axial resistivity according to claim 10, wherein the function expression between the stibium evaporation velocity and the seeding and shouldering duration is:

$$E_v = m \times t^n$$

wherein $E_v$ represents the stibium evaporation velocity in the seeding and shouldering process, $t$ represents the seeding and shouldering duration, and $m$ and $n$ represent constants.

12. A device for controlling crystal rod axial resistivity, **characterized by** comprising:

an equal-diameter growth process control module (10), configured to determine a first stibium evaporation amount in a stibium-phosphorus co-doped single-crystal growth furnace in an equal-diameter growth process according to a first correlation relationship between a stibium evaporation velocity and a remaining-material weight in the stibium-phosphorus co-doped single-crystal growth furnace, and control a stibium-phosphorus doping ratio in the equal-diameter growth process according to the first stibium evaporation amount;
a seeding and shouldering process control module (20), configured to determine a second stibium evaporation amount in the stibium-phosphorus co-doped single-crystal growth furnace in a seeding and shouldering process according to a second correlation relationship between the stibium evaporation velocity and a seeding and shouldering duration, and control the stibium-phosphorus doping ratio in the seeding and shouldering process according to the second stibium evaporation amount; and
a re-charging stage control module (30), configured to determine a third stibium evaporation amount in the stibium-phosphorus co-doped single-crystal growth furnace at a re-charging stage according to a target re-charging evaporation calculation model, and control the stibium-phosphorus doping ratio at the re-charging stage according to the third stibium evaporation amount, so that uniformity of a Czochralski crystal rod axial resistivity is within a target range.

13. A control apparatus for controlling crystal rod axial resistivity, comprising a memory and a processor, wherein the memory has a computer program stored thereon, and the processor, when executing the computer program, executes steps of the method according to any one of claims 1 to 11.

14. A computer-readable storage medium, having a computer program stored thereon, wherein the computer program, when executed by a processor, causes the processor to execute steps of the method according to any one of claims 1 to 11.

15. A computer program product, comprising a computer program, wherein the computer program, when executed by a processor, executes steps of the method according to any one of claims 1 to 11.

Determining a first stibium evaporation amount in a stibium-phosphorus co-doped single-crystal growth furnace in an equal-diameter growth process according to a first correlation relationship between a stibium evaporation velocity and a remaining-material weight in the stibium-phosphorus co-doped single-crystal growth furnace, and controlling a stibium-phosphorus doping ratio in the equal-diameter growth process according to the first stibium evaporation amount

S20

Determining a second stibium evaporation amount in the stibium-phosphorus co-doped single-crystal growth furnace in a seeding and shouldering process according to a second correlation relationship between the stibium evaporation velocity and a seeding and shouldering duration, and controlling the stibium-phosphorus doping ratio in the seeding and shouldering process according to the second stibium evaporation amount

S40

Determining a third stibium evaporation amount in the stibium-phosphorus co-doped single-crystal growth furnace at a re-charging stage according to a target re-charging evaporation calculation model, and controlling the stibium-phosphorus doping ratio at the re-feeding stage according to the third stibium evaporation amount, so that uniformity of a Czochralski crystal rod axial resistivity is within a target range

S60

FIG. 1

FIG. 2

FIG. 3a

FIG. 3b

Stibium Evaporation Velocity (cm/s)

Crystal Length (cm)

FIG. 4

Stibium Evaporation Velocity (cm/s)

Remaining-material Weight (g)

FIG. 5

Stibium Evaporation Velocity (cm/s)

Remaining-material Weight (g)

FIG. 6

Stibium Evaporation Velocity (cm/s)

Seeding and Shouldering Duration (min)

FIG. 7

FIG. 8

Europäisches
Patentamt
European
Patent Office
Office européen
des brevets

# EUROPEAN SEARCH REPORT

**Application Number**

EP 25 16 8017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 88 102 558 A (UNIV ZHEJIANG [CN]) 14 December 1988 (1988-12-14) * column 5, line 32 - column 8, line 24; claims 1-2; figure 1 * | 1-11, 13-15 | INV. C30B15/02 C30B29/06 |
| X | US 7 070 649 B2 (SILTRONIC AG [DE]) 4 July 2006 (2006-07-04) | 12 | |
| Y | * column 4, line 10 - column 5, line 30; claims 1-2; figure 1 * | 1-11, 13-15 | |
| X | JP 2009 242143 A (SUMCO TECHXIV CORP) 22 October 2009 (2009-10-22) * claims 1-6; figures 1-6 * | 12 | |
| A | PORRINI M ET AL: "Behavior of volatile dopants (P, Sb) in Czochralski silicon growth", JOURNAL OF CRYSTAL GROWTH, ELSEVIER, AMSTERDAM, NL, vol. 460, 15 December 2016 (2016-12-15), pages 13-15, XP029881300, ISSN: 0022-0248, DOI: 10.1016/J.JCRYSGRO.2016.12.028 * paragraph [0003]; figures 1-2 * | 1-15 | **TECHNICAL FIELDS SEARCHED (IPC)** C30B |
| A | US 2005/167001 A1 (KRAUTBAUER RUPERT [DE] ET AL) 4 August 2005 (2005-08-04) * paragraph [0014] - paragraph [0021]; claims 1-4 * | 1-15 | |

The present search report has been drawn up for all claims

| Place of search | Date of completion of the search | Examiner |
|---|---|---|
| The Hague | 3 November 2025 | Lavéant, Pierre |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 16 8017

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2025

| Patent document cited in search report | | Publication date | Patent family member(s) | | Publication date |
|---|---|---|---|---|---|
| CN 88102558 | A | 14-12-1988 | NONE | | |
| US 7070649 | B2 | 04-07-2006 | CN | 1498988 A | 26-05-2004 |
| | | | DE | 10250822 A1 | 19-05-2004 |
| | | | JP | 4808917 B2 | 02-11-2011 |
| | | | JP | 2004149411 A | 27-05-2004 |
| | | | KR | 20040038705 A | 08-05-2004 |
| | | | TW | I248993 B | 11-02-2006 |
| | | | US | 2004083947 A1 | 06-05-2004 |
| JP 2009242143 | A | 22-10-2009 | NONE | | |
| US 2005167001 | A1 | 04-08-2005 | CN | 1649092 A | 03-08-2005 |
| | | | DE | 102004004555 A1 | 18-08-2005 |
| | | | JP | 2005220013 A | 18-08-2005 |
| | | | KR | 20050077754 A | 03-08-2005 |
| | | | TW | 200525053 A | 01-08-2005 |
| | | | US | 2005167001 A1 | 04-08-2005 |

EPO FORM P0459

For more details about this annex : see Official Journal of the European Patent Office, No. 12/82